# EUROPÄISCHE PATENTANMELDUNG

(11) **EP 3 255 388 A1**
(43) Veröffentlichungstag der Anmeldung: **13.12.2017**
(21) Anmeldenummer: 17161576.8
(22) Anmeldetag: 17.03.2017
(51) Int. Cl.: G01D 11/30, G01D 21/00

(54) **SENSORTRÄGERFOLIE FÜR EIN OBJEKT UND VERFAHREN ZUM BESTÜCKEN EINES OBJEKTS MIT EINER SENSORIK**

(30) Priorität: 10.06.2016 DE 102016210303
(71) Anmelder: Airbus Defence and Space GmbH, 82024 Taufkirchen (DE); Airbus Operations GmbH, 21129 Hamburg (DE)
(72) Erfinder: FRIEDBERGER, Alois, 85667 Oberpframmern (DE); ZIEMANN, Thomas, 84416 Inning am Holz (DE); FIDEU-SIAGAM, Paulin, 21129 Hamburg (DE)
(74) Vertreter: Isarpatent

(57) **Zusammenfassung**

Die vorliegende Erfindung schafft eine Sensorträgerfolie (10) für ein Objekt mit einem Folienkörper (12), welcher an dem Objekt befestigbar ist, wobei der Folienkörper (12) ausgebildet ist mit mindestens zwei an und/oder in dem Folienkörper (12) angeordneten folieneigenen Sensoren (16) und/oder mindestens zwei an und/oder in dem Folienkörper (12) ausgebildeten Sensor-Anschlusskontakten, an welchen je ein externer Sensor elektrischen anbindbar ist, mindestens einer an und/oder in dem Folienkörper (12) angeordneten folieneigenen Steuer- und/oder Auswerteeinrichtung und/oder mindestens einem an und/oder in dem Folienkörper (12) ausgebildeten Einrichtung-Anschlusskontakt (18), an welchem mindestens eine externe Steuerund/oder Auswerteeinrichtung elektrisch anbindbar ist, und mindestens zwei an und/oder in dem Folienkörper (12) ausgebildeten Leiterbahnen (20), über welche die mindestens eine folieneigene Steuer- und/oder Auswerteeinrichtung und/oder der mindestens eine Einrichtung-Anschlusskontakt (18) mit den mindestens zwei folieneigenen Sensoren (16) und/oder den mindestens zwei Sensor-Anschlusskontakten verbunden sind. Ebenso schafft die Erfindung ein Verfahren zum Bestücken eines Objekts mit einer Sensorik zum Ermitteln mindestens einer physikalischen Größe und/oder mindestens einer chemischen Konzentration.

## Beschreibung

Die vorliegende Erfindung betrifft eine Sensorträgerfolie für ein Objekt, einen Blister, ein Verfahren zum Bestücken eines Objekts mit einer Sensorik zum Ermitteln mindestens einer physikalischen Größe und/oder mindestens einer chemischen Konzentration, ein Messverfahren, ein Verfahren zum Einstellen einer Atmosphäre für ein Objekt, ein Verfahren zum Autoklavieren eines Objekts und ein Herstellungsverfahren zum Herstellen einer Sensorträgerfolie für ein Objekt.

Obwohl auf beliebige Objekte anwendbar, werden die vorliegende Erfindung sowie die ihr zugrunde liegende Problematik in Bezug auf Gegenstände, die zumindest teilweise aus mindestens einem Faserverbundwerkstoff geformt sind, wie beispielsweise einem Blister, näher erläutert.

Eine Herstellung eines Gegenstands zumindest teilweise aus mindestens einem Faserverbundwerkstoff erfolgt häufig in einem Autoklaven, in welchem der Gegenstand durch einen Aushärteprozess (z.B. bei 180°C) ausgehärtet wird. Zur Überwachung bzw. Analysierung des Aushärteprozesses ist es oft vorteilhaft, an mehreren Messstellen des jeweiligen Gegenstands eine Temperatur zu messen. Allerdings erfordert dies herkömmlicherweise einen signifikanten Installationsaufwand zur Anbringung von mehreren Thermoelementen an verschiedenen Messstellen und zur Verkabelung von jedem Thermoelement mit mindestens einer Steuer- und/oder Auswerteeinrichtung.

Es ist daher die Aufgabe der vorliegenden Erfindung, Möglichkeiten zur Vereinfachung einer Bestückung eines Objekts mit einer derartigen Sensorik zu schaffen.

Erfindungsgemäß wird diese Aufgabe durch die Sensorträgerfolie für ein Objekt mit den Merkmalen des Patentanspruchs 1, dem Blister mit den Merkmalen des Patentanspruchs 8, das Verfahren zum Bestücken eines Objekts mit einer Sensorik mit den Merkmalen des Patentanspruchs 10, das Messverfahren mit den Merkmalen des Patentanspruchs 11, das Verfahren zum Einstellen einer Atmosphäre für ein Objekt mit den Merkmalen des Patentanspruchs 12, das Verfahren zum Autoklavieren eines Objekts mit den Merkmalen des Patentanspruchs 13 und das Herstellungsverfahren zum Herstellen einer Sensorträgerfolie für ein Objekt mit den Merkmalen des Patentanspruchs 14 gelöst.

Die der vorliegenden Erfindung zugrunde liegende Idee besteht darin, dass ein Objekt leicht mit mindestens zwei Sensoren und mindestens einer damit zusammenwirkenden Steuer- und/oder Auswerteeinrichtung bestückbar ist, wenn die Sensoren und die mindestens eine Steuer- und/oder Auswerteeinrichtung Komponenten der erfindungsgemäßen Sensorträgerfolie sind und/oder an dem mindestens einen Anschlusskontakt der Sensorträgerfolie elektrisch anbindbar sind. Das Bestücken des Objekts mit den mindestens zwei Sensoren und der mindestens einen damit zusammenwirkenden Steuer- und/oder Auswerteeinrichtung erfordert in diesem Fall lediglich ein Befestigen des Folienkörpers der Sensorträgerfolie an dem Objekt und eventuell ein elektrisches Anbinden der mindestens zwei Sensoren und/oder der mindestens einen Steuer- und/oder Auswerteeinrichtung an dem mindestens einen Anschlusskontakt der Sensorträgerfolie. Dies ist mittels eines relativ geringen Arbeitsaufwands ausführbar. Zusätzlich sind die dazu auszuführenden Arbeitsschritte so stark vereinfacht, dass selbst eine Person ohne Fachkenntnisse sie ausführen kann. Des Weiteren wird darauf hingewiesen, dass zum Ausführen dieser Arbeitsschritte kein teures Werkzeug nötig ist.

Beispielsweise können mindestens 5 folieneigene Sensoren und/oder Sensor-Anschlusskontakte, auch mindestens 10 folieneigene Sensoren und/oder Sensor-Anschlusskontakte, speziell auch mindestens 15 folieneigene Sensoren und/oder Sensor-Anschlusskontakte, vor allem auch mindestens 20 folieneigene Sensoren und/oder Sensor-Anschlusskontakte, an dem Folienkörper der Sensorträgerfolie befestigt sein. Entsprechend können mindestens 10 Leiterbahnen, auch mindestens 20 Leiterbahnen, speziell auch mindestens 50 Leiterbahnen, an und/oder in dem Folienkörper ausgebildet sein. Insbesondere können Dutzende oder Hunderte von Messstellen an dem jeweiligen Objekt mit einem geringen Installationsaufwand mit mindestens einem Sensor bestückt werden, wobei durch Befestigung der Sensorträgerfolie an dem jeweiligen Objekt auch für die Verkabelung der Dutzenden oder Hunderten von Sensoren mit der mindestens einen Steuer- und/oder Auswerteeinrichtung gesorgt ist. Durch die einfach und wenig arbeitsaufwändig realisierbare Möglichkeit zur Bestückung des jeweiligen Objekts mit Dutzenden oder Hunderten von Sensoren an verschiedenen Messstellen können die von den Sensoren gelieferten und mittels der mindestens einen Steuer- und/oder Auswerteeinrichtung ausgewerteten Messsignale zur verlässlichen Überwachung bzw. Analysierung des jeweiligen Objekts, insbesondere bei einem Verarbeiten des Objekts (wie beispielsweise in einem Autoklaven), verwendet werden. Die vorliegende Erfindung trägt somit auch zur erleichterten und verbesserten Herstellbarkeit von Objekten, wie beispielsweise eines zumindest teilweise aus mindestens einem Faserverbundwerkstoff geformten Gegenstands, bei.

In den Unteransprüchen finden sich vorteilhafte Ausgestaltungen und Verbesserungen der Erfindung.

Gemäß einer bevorzugten Weiterbildung der Sensorträgerfolie sind mindestens ein Temperatursensor, mindestens ein Drucksensor, mindestens ein kapazitiver Sensor, mindestens ein Ultraschallsensor, mindestens ein Leckagedetektionssensor, mindestens ein Dehnungsmesssensor, mindestens ein Fließgeschwindigkeitssensor, mindestens ein Fließdrucksensor, mindestens ein Härtemesssensor, mindestens ein chemischer Nachweissensor, mindestens ein chemischer Stoffkonzentrationsmesssensor, mindestens ein Feuchtigkeitssensor und/oder mindestens ein Gassensor als die mindestens zwei folieneigenen Sensoren an und/oder in dem Folienkörper angeordnet und/oder als die mindestens zwei externen Sensoren an den mindestens zwei Sensor-Anschlusskontakten elektrisch anbindbar. Es wird darauf hingewiesen, dass die Sensorträgerfolie auch mit Dutzenden oder Hunderten von derartigen Sensoren bestückt sein kann. Somit kann eine Vielzahl von vorteilhaft einsetzbaren Sensoren, insbesondere eine Vielzahl von verschiedenen Sensoren, auf einfache Weise an einem Objekt angebracht werden.

Insbesondere können Sensorsignale von den mindestens zwei folieneigenen und/oder an den mindestens zwei Sensor-Anschlusskontakten elektrisch angebundenen externen Sensoren über die mindestens zwei Leiterbahnen zu der mindestens einen folieneigenen und/oder an dem mindestens einen Einrichtung-Anschlusskontakt elektrisch angebundenen externen Steuer- und/oder Auswerteeinrichtung transferierbar sein. Somit kann eine Elektronik der mindestens einen Steuer- und/oder Auswerteeinrichtung für die Sensoren, insbesondere für Dutzende oder Hunderte von Sensoren, genutzt werden. Als Sensoren können somit kostengünstige Sensorkomponenten, wie beispielsweise Thermoelemente und/oder Pt100, verwendet werden. Auf eine Ausstattung jedes der Sensoren mit einer teuren Elektronik kann verzichtet werden.

Als Alternative oder als Ergänzung dazu können auch Steuersignale von der mindestens einen folieneigenen und/oder an dem mindestens einen Einrichtung-Anschlusskontakt elektrisch angebundenen externen Steuer- und/oder Auswerteeinrichtung über die mindestens zwei Leiterbahnen zu den mindestens zwei folieneigenen und/oder an den mindestens zwei Sensor-Anschlusskontakten elektrisch angebundenen externen Sensoren transferierbar sein. Die Steuer- und/oder Auswerteeinrichtung kann somit auch zum Betreiben und/oder situationsabhängige Ansteuern der Sensoren, insbesondere von Dutzenden oder Hunderten von Sensoren, eingesetzt werden. Auf eine Ausstattung der Sensoren mit einer eigenen Steuerelektronik kann deshalb verzichtet werden.

Gemäß einer weiteren bevorzugten Ausführungsform der Sensorträgerfolie ist eine Objektkontaktfläche des Folienkörpers zumindest teilflächig mit mindestens einem Klebstoff beschichtet. Dies erleichtert ein Befestigen der Sensorträgerfolie an dem jeweiligen Objekt.

Beispielsweise kann der Folienkörper mindestens eine elektrisch-isolierende Folienschicht, mindestens eine thermisch-isolierende Folienschicht und/oder mindestens eine flexible Folienschicht umfassen. Insbesondere können auch mehrschichtige Folien als Folienkörper einsetzbar sein. Des Weiteren kann der Folienkörper mindestens einen optisch transparenten Flächenbereich und mindestens einen optisch nicht transparenten (z.B. reflektierenden) Flächenbereich aufweisen, so dass ein unterschiedliches optisches Verhalten von Teilflächen des Folienkörpers sensorisch ausnutzbar ist.

Bevorzugter Weise sind die mindestens zwei folieneigenen Sensoren je auf mindestens einem hochtemperaturkompatiblen Halbleiterchip ausgebildet. Eine Verwendbarkeit der mindestens zwei folieneigenen Sensoren wird in diesem Fall selbst durch in einem Autoklaven auftretende hohe Temperaturen nicht beeinflusst. Auch die mindestens eine Steuer- und/oder Auswerteeinrichtung kann je auf mindestens einen hochtemperaturkompatiblen Halbleiterchip ausgebildet sein. Als Alternative dazu kann der Folienkörper auch mit einer Länge ausgebildet werden, welche nach einer Anordnung des mit den mindestens zwei Sensoren bestückten Objekts in dem Autoklaven ein Herausragen eines mit der mindestens einen Steuer- und/oder Auswerteeinrichtung ausgestatteten Teils des Folienkörpers erlaubt. Als weitere Alternative können auch zwei Sensorträgerfolien für das gleiche Objekt verwendet werden, wobei die zwei Sensorträgerfolien an mindestens einer Fügestelle miteinander verbunden werden (z.B. durch Löten) und mindestens eine der zwei Sensorträgerfolien zumindest teilweise aus dem Autoklaven herausragt. Die zwei Sensorträgerfolien können sich an der mindestens einen Fügestelle überlappen, insbesondere kann eine der Sensorträgerfolie "face-down" platziert werden. Ein lösbarer Halt zwischen den zwei Sensorträgerfolien kann durch Druck oder durch einen dazwischen eingefügten Stoff, wie z.B. eine anisotrope leitfähige Zwischenfolie, bewirkt werden.

Die vorausgehend beschriebenen Vorteile sind auch bei einem Blister mit einer daran befestigten derartigen Sensorträgerfolie gewährleistet. Die Sensorträgerfolie kann jedoch auch unabhängig von dem Blister verwendet werden, zum Beispiel auch für ein Tooling oder auf einem Abreißgewebe.

Gemäß einer vorteilhaften Ausführungsform des Blisters ist der Folienkörper der Sensorträgerfolie aus mindestens einem Material des Blisters gebildet. In diesem Fall kann der mit der Sensorträgerfolie bestückte Blister nach einem Gebrauch leicht einem herkömmlichen Recycling zugeführt werden, ohne dass auf eine chemische Zusammensetzung der Sensorträgerfolie zu achten ist. Folieneigene Sensoren und/oder folieneigene Steuer- und/oder Auswerteeinrichtung können vor dem Recycling ausgestanzt, abgezogen oder anderweitig entfernt werden.

Die oben beschriebenen Vorteile sind auch bei einem Ausführen eines korrespondierenden Verfahrens zum Bestücken eines Objekts mit einer Sensorik zum Ermitteln mindestens einer physikalischen Größe und/oder mindestens einer chemischen Konzentration geschaffen. Es wird darauf hingewiesen, dass das Verfahren zum Bestücken eines Objekts mit einer Sensorik gemäß den oben beschriebenen Ausführungsformen der Sensorträgerfolie und des Blisters weiterbildbar ist.

Als vorteilhafte Weiterbildung schafft auch ein entsprechendes Messverfahren die oben beschriebenen Vorteile. Auch das Messverfahren ist gemäß den Ausführungsformen der Sensorträgerfolie und/oder des Blisters weiterbildbar.

Zusätzlich kann ein korrespondierendes Verfahren zum Einstellen einer Atmosphäre für ein Objekt zum Bewirken der oben beschriebenen Vorteile ausgeführt werden. Als vorteilhafter Spezialfall kann ein entsprechendes Verfahren zum Autoklavieren eines Objekts zur Realisierung der oben beschriebenen Vorteile ausgeführt werden. Alle in diesem Absatz genannten Verfahren sind gemäß den oben beschriebenen Ausführungsformen der Sensorträgerfolie und/oder des Blisters weiterbildbar.

Des Weiteren schafft auch ein korrespondierendes Herstellungsverfahren zum Herstellen einer Sensorträgerfolie für ein Objekt die oben schon erläuterten Vorteile. Auch das Herstellungsverfahren kann gemäß den Ausführungsformen der Sensorträgerfolie und/oder des Blisters weitergebildet werden.

Die Erfindung wird im Folgenden anhand von Ausführungsbeispielen unter Bezugnahme auf die beiliegenden Figuren näher erläutert.

Von den Figuren zeigen:
- Fig. 1a bis 1c: eine schematische Gesamtdarstellung und schematische Teildarstellungen einer ersten Ausführungsform der Sensorträgerfolie;
- Fig. 2: eine schematische Darstellung einer zweiten Ausführungsform der Sensorträgerfolie;
- Fig. 3: eine schematische Darstellung eines Blisters zum Erläutern einer Ausführungsform des Verfahrens zum Bestücken eines Objekts mit einer Sensorik;
- Fig. 4: ein Flussdiagramm zum Erläutern einer Ausführungsform des Verfahrens zum Einstellen einer Atmosphäre für ein Objekt; und
- Fig. 5: ein Flussdiagramm zum Erläutern einer Ausführungsform des Herstellungsverfahrens zum Herstellen einer Sensorträgerfolie für ein Objekt.

In den Figuren bezeichnen dieselben Bezugszeichen gleiche oder funktionsgleiche Komponenten, soweit nichts Gegenteiliges angegeben ist.

Obwohl die vorliegende Erfindung anhand bevorzugter Ausführungsbeispiele beschrieben wird, ist sie darauf nicht beschränkt, sondern auf vielfältige Weise modifizierbar.

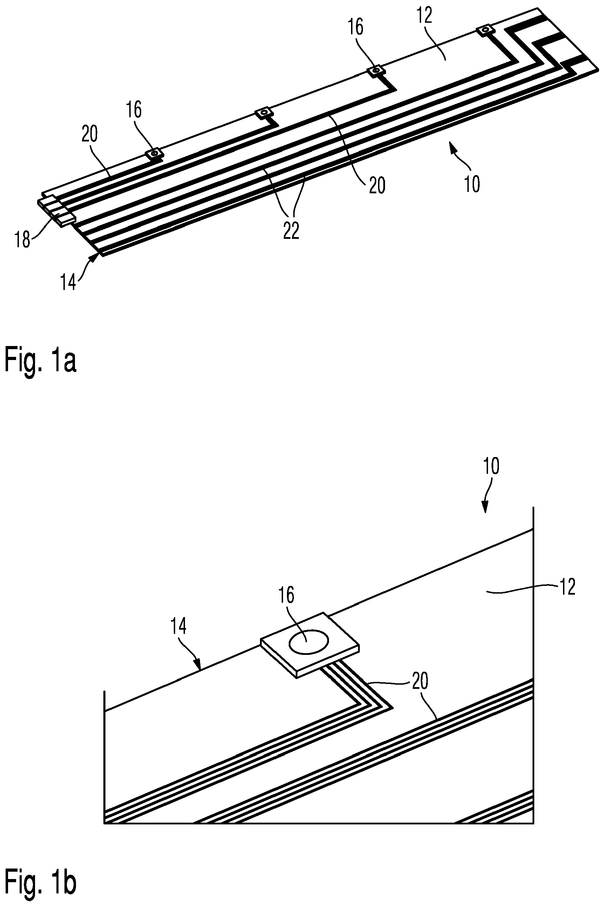

Fig. 1a bis 1c zeigen eine schematische Gesamtdarstellung und schematische Teildarstellungen einer ersten Ausführungsform der Sensorträgerfolie.

Die in den Fig. 1a bis 1c schematisch wiedergegebene Sensorträgerfolie 10 umfasst einen Folienkörper 12, welcher an einem (nicht dargestellten) Objekt befestigbar ist. Unter dem Folienkörper 12 kann ein folienförmiger und/oder schichtförmiger Grundkörper verstanden werden. Der Folienkörper 12 kann insbesondere eine Höhe kleiner oder gleich 1 mm (Millimeter), beispielsweise eine Höhe zwischen 20 µm bis 500 µm (Mikrometer), insbesondere eine Höhe zwischen 50 µm bis 150 µm, haben, während eine Länge und/oder eine Breite des Folienkörpers 12 mindestens 5 cm (Zentimeter), bevorzugter Weise mindestens 10 cm, betragen können. Die Länge und/oder die Breite des Folienkörpers 12 kann auch mindestens 1 m (Meter) sein. Insbesondere können die Länge und/oder die Breite des Folienkörpers 12 in einem Bereich zwischen 5 m bis 25 m (Meter), z.B. zwischen 10 m bis 20 m, liegen. Der Folienkörper 12 kann aus einer Vielzahl von Materialien, insbesondere aus einer Vielzahl von herkömmlicherweise zur Folienherstellung verwendeten Materialien, gebildet sein. Beispielsweise kann der Folienkörper 12 mindestens eine elektrisch-isolierende Folienschicht, mindestens eine thermisch-isolierende Folienschicht und/oder mindestens eine flexible Folienschicht umfassen. Insbesondere kann der Folienkörper 12 aus mindestens einem Material mit einer guten Temperaturbeständigkeit bestehen. Eine mit einem derartigen Folienkörper 12 ausgestattete Sensorträgerfolie 10 kann selbst in einem Autoklaven noch vorteilhaft eingesetzt werden.

Zur Befestigung des Folienkörpers 12 an dem Objekt kann eine als Objektkontaktfläche 14 bezeichenbare Außenfläche des Folienkörpers 12 zumindest teilflächig mit mindestens einem Klebstoff beschichtet sein. (Unter der Objektkontaktfläche 14 kann die Außenfläche des Folienkörpers 12 verstanden werden, welche nach dem Befestigen der Sensorträgerfolie 10 an dem Objekt das Objekt kontaktiert.) Als der mindestens eine Klebstoff können mindestens ein elektrisch leitender Klebstoff und/oder mindestens ein temperaturleitender Klebstoff auf die Objektkontaktfläche 14 aufgebracht sein. Über den mindestens einen Klebstoff kann somit auch ein guter elektrischer Kontakt und/oder ein guter thermischer Kontakt zwischen der Sensorträgerfolie 10 und zumindest einer von der Objektkontaktfläche 14 kontaktierten Außenseite des Objekts geschaffen werden. Außerdem kann die Objektkontaktfläche 14 zumindest teilweise mit mindestens einem Klebstoff beschichtet sein, welcher es erlaubt, nach dem Gebrauch der an dem Objekt befestigten Sensorträgerfolie 10 diese von dem Objekt abzureißen. Dies erleichtert ein Recycling des Objekts (ohne die Sensorträgerfolie 10) und/oder eine Wiederverwertung der Sensorträgerfolie 10 für ein anderes Objekt. Außerdem kann der mindestens eine Klebstoff mit einer Schutzfolie bedeckt sein, welche vor einem Befestigen/einer Montage der Sensorträgerfolie 10 an dem Objekt abziehbar ist.

Bei der Sensorträgerfolie 10 der Fig. 1a bis 1c ist der Folienkörper 12 mit mindestens zwei an und/oder in dem Folienkörper 12 angeordneten folieneigenen Sensoren 16 ausgebildet. Die mindestens zwei Sensoren 16 können z.B. auf den Folienkörper 12 aufgedruckt, geklebt, festgesteckt und/oder aufgelötet und/oder in den Folienkörper 12 integriert sein. In der Ausführungsform der Fig. 1a bis 1c sind die mindestens zwei Sensoren 16 auf einer von der Objektkontaktfläche 14 weg gerichteten Seite des Folienkörpers 12 angeordnet. Es wird jedoch darauf hingewiesen, dass mindestens einer der Sensoren 16 auch auf der Objektkontaktfläche 14 liegen kann. Auf diese Weise kann beispielsweise ein direkter Kontakt zwischen dem jeweiligen Sensor 16 und zumindest der von der Objektkontaktfläche 14 kontaktierten Außenseite des Objekts sichergestellt werden.

In der Ausführungsform der Fig. 1a bis 1c weist die Sensorträgerfolie 10 beispielhaft vier Sensoren 16 auf. Es wird jedoch darauf hingewiesen, dass eine Ausbildbarkeit der Sensorträgerfolie 10 nicht auf eine bestimmte Anzahl von Sensoren 16 beschränkt ist. Insbesondere können Dutzende oder Hunderte von Sensoren 16 an und/oder in dem Folienkörper 12 angeordnet sein. Mittels der Anordnung/Platzierung der mindestens zwei Sensoren 16 an und/oder in der Sensorträgerfolie 10 kann, sofern gewünscht, eine Messstelle jedes Sensors 16 festgelegt sein. Insbesondere kann auf diese Weise sichergestellt werden, dass nach dem Befestigen der Sensorträgerfolie 10 an dem Objekt jeder Sensor 16 an der gewünschten/richtigen Messstelle vorliegt. Auch bei einer sehr hohen Anzahl von Sensoren 16 ist eine Verwechslung von Sensoren 16 oder Messstellen ausgeschlossen.

Mindestens einer der Sensoren 16 kann zum Beispiel ein Temperatursensor, wie insbesondere ein Thermoelement und/oder ein Pt100, sein. Als Alternative oder als Ergänzung dazu kann mindestens einer der Sensoren 16 jedoch auch ein Drucksensor, ein kapazitiver Sensor, ein Ultraschallsensor, ein Leckagedetektionssensor, ein Dehnungsmesssensor, ein Fließgeschwindigkeitssensor, ein Fließdrucksensor, ein Härtemesssensor, ein chemischer Nachweissensor, ein chemischer Stoffkonzentrationsmesssensor, ein Feuchtigkeitssensor und/oder ein Gassensor sein. Es wird ausdrücklich darauf hingewiesen, dass eine Ausbildbarkeit der mindestens zwei folieneigenen Sensoren 16 nicht auf einen bestimmten Sensortyp limitiert ist. Insbesondere keramische Sensoren, wie beispielsweise keramische Temperatursensoren, können für die Sensorträgerfolie 10 verwendet werden. Derartige keramische Sensoren zeichnen sich durch eine hohe Messgenauigkeit und/oder eine gute Temperaturbeständigkeit aus.

Vorzugsweise sind die mindestens zwei folieneigenen Sensoren 16 je auf mindestens einem Halbleiterchip ausgebildet. Insbesondere können die mindestens zwei folieneigenen Sensoren 16 je auf mindestens einem hochtemperaturkompatiblen Halbleiterchip ausgebildet sein. Eine derart bestückte Sensorträgerfolie 10 kann vorteilhaft in einem Autoklaven eingesetzt werden.

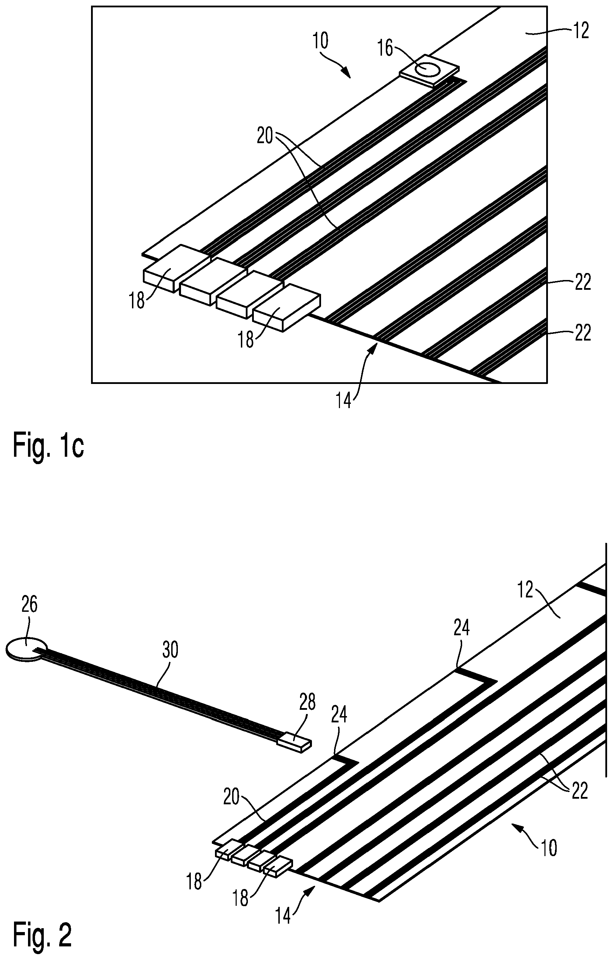

Außerdem weist die Sensorträgerfolie 10 der Fig. 1a und 1c mindestens einen am und/oder in dem Folienkörper 12 ausgebildeten Einrichtung-Anschlusskontakt 18 auf, an welchem mindestens eine (nicht dargestellte) externe Steuer- und/oder Auswerteeinrichtung elektrisch anbindbar ist. Als Alternative oder Ergänzung zu dem mindestens einen Einrichtung-Anschlusskontakt 18 für die mindestens eine externe Steuer- und/oder Auswerteeinrichtung kann der Folienkörper 12 auch mit mindestens einer an und/oder in dem Folienkörper 12 angeordneten folieneigenen Steuer- und/oder Auswerteeinrichtung ausgebildet sein. Vorzugsweise ist der mindestens eine Einrichtung-Anschlusskontakt 18 je als erste Steckverbindungs-Komponente ausgebildet, an welcher jeweils eine zweite Steckverbindungs-Komponente der mindestens einen externen Steuer- und/oder Auswerteeinrichtung so feststeckbar ist, dass Sensorsignale der mindestens zwei Sensoren 16 mittels der mindestens einen externen Steuer- und/oder Auswerteeinrichtung abgreifbar sind. Insbesondere bei einer hohen Anzahl von Sensoren 16 kann der mindestens eine Einrichtung-Anschlusskontakt 18 wie ein Multiplexer-Chip ausgebildet sein, so dass nur sehr wenige Kabel von dem mindestens einen Einrichtung-Anschlusskontakt 18 zur der externen Steuer- und/oder Auswerteeinrichtung benötigt werden. Neben einem Multiplexer können z.B. auch eine Signaldigitalisierungseinheit (insbesondere zur Anbindung an ein Bussystem) und/oder eine Einheit zur Ermöglichung drahtloser Kommunikation eingesetzt werden.

Außerdem sind mindestens zwei Leiterbahnen 20 an und/oder in dem Folienkörper 12 ausgebildet, über welche der mindestens eine Einrichtung-Anschlusskontakt 18 (bzw. die mindestens eine folieneigene Steuer- und/oder Auswerteeinrichtung) mit den mindestens zwei folieneigenen Sensoren verbunden ist. Vorzugsweise ist mindestens eine Leiterbahn 20 pro Sensor 16 an und/oder in dem Folienkörper 12 ausgebildet. Es können auch mehrere Leiterbahnen 20 pro Sensor 16, wie z.B. bis zu vier Leiterbahnen 20 für jeden als Temperatursensor für eine Vierleiter-Messung ausgelegten Sensor 16, an und/oder in der Sensorträgerfolie 10 ausgebildet sein. Dies gewährleistet ein verlässliches Zusammenwirken der mindestens zwei Sensoren 16 mit der mindestens einen folieneigenen und/oder externen Steuer- und/oder Auswerteeinrichtung. Somit ist es nicht notwendig, jeden der Sensoren 16 mit aufwändigen und teuren Elektroniken auszubilden, da derartige Elektroniken als Komponenten der mindestens einen folieneigenen oder externen Steuer- und/oder Auswerteeinrichtung für alle Sensoren 16 nutzbar sind.

Es wird darauf hingewiesen, dass die Leiterbahnen 20 vorzugsweise eine Mindestlänge und/oder eine mittlere Länge (über alle Leiterbahnen 20 gemittelt) aufweisen, welche um zumindest einen Faktor 5, vorzugsweise um einen Faktor 10, insbesondere um einen Faktor 25, bevorzugter Weise um einen Faktor 50, größer als eine maximale Ausdehnung der mindestens zwei Sensoren 16 ist. Die Sensorträgerfolie 10 kann deshalb auch als ein "Kabelbaum", "sensorbestückter Kabelbaum", "flexible Leiterplatte" und/oder als eine "sensorbestückte flexible Leiterplatte" umschrieben werden.

Vorzugsweise sind die mindestens zwei Leiterbahnen 20 so ausgebildet, dass Sensorsignale von den mindestens zwei Sensoren 16 über die mindestens zwei Leiterbahnen 20 zu der mindestens einen folieneigenen und/oder an dem mindestens einen Einrichtung-Anschlusskontakt 18 elektrisch angebundenen externen Steuer- und/oder Auswerteeinrichtung transferierbar sind. Ebenso kann mittels der mindestens zwei Leiterbahnen 20 gewährleistet werden, dass Steuersignale von der mindestens einen folieneigenen und/oder an dem mindestens einen Einrichtung-Anschlusskontakt 18 elektrisch angebundenen externen Steuer- und/oder Auswerteeinrichtung über die mindestens zwei Leiterbahnen 20 zu den mindestens zwei Sensoren 16 transferierbar sind. Ein gutes Zusammenwirken zwischen den mindestens zwei Sensoren 16 und der mindestens einen Steuer- und/oder Auswerteeinrichtung kann somit selbst bei einem signifikanten Mindestabstand zwischen den mindestens zwei Sensoren 16 und der mindestens einen Steuer- und/oder Auswerteeinrichtung sichergestellt sein. Die mindestens eine Steuer- und/oder Auswerteeinrichtung kann somit auch weit von den mindestens zwei zusammenwirkenden Sensoren 16 beabstandet und im Vergleich mit den mindestens zwei zusammenwirkenden Sensoren 16 in einer "geschützten Position" eingesetzt werden. Beispielsweise kann die mindestens eine Steuer- und/oder Auswerteeinrichtung außerhalb eines Autoklaven angeordnet werden, während mittels der mindestens zwei zusammenwirkenden Sensoren 16 das im Autoklaven bearbeitete Objekt vermessen wird.

Insbesondere kann der Folienkörper 12 einen Mehrlagenaufbau haben, in welchem mindestens eine isolierende Schicht die Leiterbahnen 20 abschirmt. Außerdem können die Leiterbahnen 20 als (koplanare) Wellenleiter ausgebildet sein. Zusätzlich können in und/oder auf dem Folienkörper 12 noch weitere Leiterbahnen 22 ausgebildet sein, welche sich von einem Ende des Folienkörpers 12 zu einem anderen Ende des Folienkörpers 12 erstrecken.

Fig. 2 zeigt eine schematische Darstellung einer zweiten Ausführungsform der Sensorträgerfolie.

Die in Fig. 2 schematisch dargestellte Sensorträgerfolie 10 weist als Abweichung zu der zuvor beschriebenen Ausführungsform mindestens zwei an und/oder in dem Folienkörper 12 ausgebildete Sensor-Anschlusskontakte 24, an welchen je ein externer Sensor 26 elektrisch anwendbar ist, auf. Auch in diesem Fall ist der mindestens eine Einrichtung-Anschlusskontakt 18 (bzw. die mindestens eine folieneigene Steuer- und/oder Auswerteeinrichtung) über die mindestens zwei Leiterbahnen 20 mit den mindestens zwei Sensor-Anschlusskontakten 24 verbunden. Die Sensorträgerfolie 10 kann somit auch nur als "Kabelbaum" und "Anschlusskontakt-Träger" verwendet werden.

Auch mittels einer derartigen Sensorträgerfolie 10 können flexible Positionen/Messpositionen für die mindestens zwei externen Sensoren 26 realisiert werden. In der Ausführungsform der Fig. 2 sind die mindestens zwei Sensor-Anschlusskontakte 24 je ein erstes Steckverbindungsteil, welches mit jeweils einem an dem externen Sensor 26 fest angebundenen zweiten Steckverbindungsteil 28 eine Steckverbindung ausbilden kann. Insbesondere kann zwischen dem externen Sensor 26 und dem zweiten Steckverbindungsteil 28 ein Kabelbaum 30 liegen, über dessen Länge eine Flexibilität bei der Anordnung des zugeordneten externen Sensors 26 in seiner Messposition steigerbar ist.

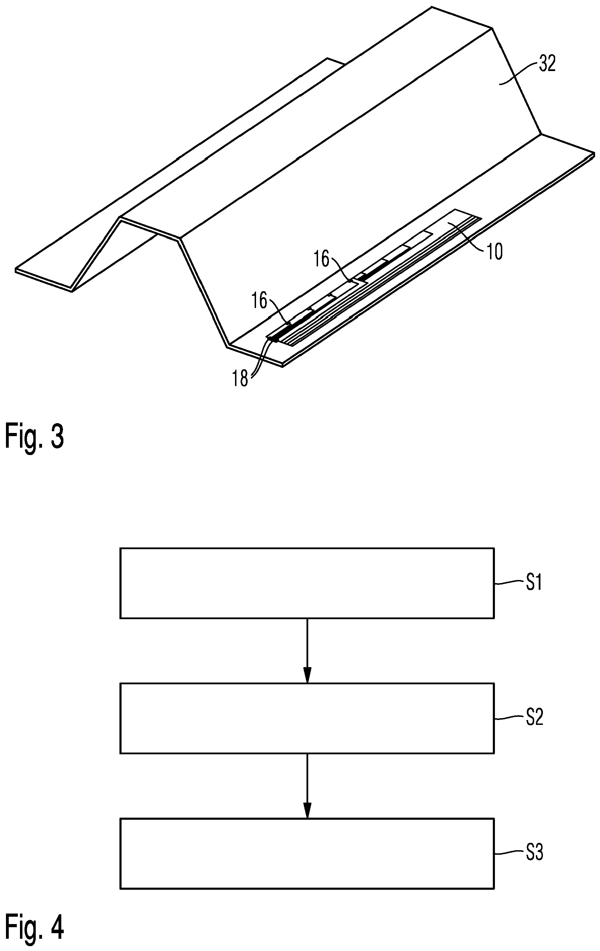

Fig. 3 zeigt eine schematische Darstellung eines Blisters zum Erläutern einer Ausführungsform des Verfahrens zum Bestücken eines Objekts mit einer Sensorik.

Das im Weiteren beschriebene Verfahren zum Bestücken eines Objekts mit einer Sensorik zum Ermitteln mindestens einer physikalischen Größe und/oder mindestens einer chemischen Konzentration wird beispielhaft unter Verwendung eines Blisters 32 als dem Objekt beschrieben. Es wird jedoch darauf hingewiesen, dass eine Ausführbarkeit dieses Verfahren nicht auf einen bestimmten Objekttyp limitiert ist.

Unter dem Blister 32 kann ein Vakuumsack aus einem Faserverbundwerkstoff, wie beispielsweise einem 500 bis 700 µm dicken Polymer, verstanden werden. Bei der Herstellung des Blisters 32 können (nicht skizzierte) Bauteile/Stützkomponenten, wie beispielsweise Stringer, in dem Blister 32 positioniert und ausgerichtet werden. Außerdem wird bei einer Herstellung eines Blisters 32 in der Regel ein Aushärteprozess in einem Autoklaven ausgeführt, z.B. bei einer Temperatur von etwa 180°C, um die einzelnen Komponenten des Blisters 32 miteinander zu verbinden.

Bei dem hier beschriebenen Verfahren wird eine Sensorträgerfolie 10 an dem Blister 32 befestigt. Beispielsweise wird die Objektkontaktfläche 14 des Folienkörpers 12 der Sensorträgerfolie 10 auf dem Blister 32 festgeklebt. Es wird darauf hingewiesen, dass es häufig ausreichend ist, eine Außenfläche des Blisters 32 lediglich teilweise mit der Sensorträgerfolie 10 abzudecken. Alternativ kann jedoch zumindest eine gesamte Seite des Blisters 32, auch die gesamte Außenfläche des Blisters 32, mit der Sensorträgerfolie 10 abgedeckt werden.

Die mindestens zwei folieneigenen Sensoren 16 der Sensorträgerfolie 10 der Fig. 3 sind dazu ausgelegt, Sensorsignale bezüglich der mindestens einen physikalischen Größe und/oder der mindestens einen chemischen Konzentration auszugeben. Als Alternative zur Verwendung der Sensorträgerfolie 10 mit den mindestens zwei folieneigenen Sensoren 16 können auch an den mindestens zwei Sensor-Anschlusskontakten 24 eines anderen Sensorträgerfolientyps mindestens zwei zum Bereitstellen von Sensorsignalen bezüglich der mindestens einen physikalischen Größe und/oder der mindestens einen chemischen Konzentration ausgelegte externe Sensoren 26 elektrisch angebunden werden.

Bei der Ausführungsform der Fig. 3 wird auch mindestens eine zum Festlegen und Ausgeben mindestens einer Information bezüglich der mindestens einen physikalischen Größe und/oder der mindestens einen chemischen Konzentration ausgelegte (nicht dargestellte) externe Steuer- und/oder Auswerteeinrichtung an dem mindestens einen Einrichtung-Anschlusskontakt 18 der Sensorträgerfolie 10 elektrisch angebunden. Als Alternative dazu kann die Sensorträgerfolie 10 jedoch auch mindestens eine folieneigene Steuer- und/oder Auswerteeinrichtung aufweisen, welche dazu ausgelegt ist, unter Berücksichtigung der Sensorsignale die mindestens eine Information bezüglich der mindestens einen physikalischen Größe und/oder der mindestens einen chemischen Konzentration festzulegen und auszugeben.

Fig. 3 zeigt den Blister 32 mit der daran befestigten Sensorträgerfolie 10. Vorzugsweise ist der Folienkörper 12 der Sensorträgerfolie 10 aus mindestens einem Material des Blisters 32 gebildet. Dies erleichtert ein Recycling des Blisters 32 mit zumindest dem daran noch anhaftenden Folienkörper 12, wie oben schon erläutert ist.

Fig. 4 zeigt ein Flussdiagramm zum Erläutern einer Ausführungsform des Verfahrens zum Einstellen einer Atmosphäre für ein Objekt.

In einem Verfahrensschritt S1 wird das Objekt, beispielsweise ein Blister 32, mit einer Sensorik zum Ermitteln mindestens einer physikalischen Größe und/oder mindestens einer chemischen Konzentration bestückt, indem die entsprechende Sensorträgerfolie 10 an dem Objekt/Blister 32 befestigt wird. Beispielsweise können die oben beschriebenen Ausführungsformen der Sensorträgerfolie 10 an dem Objekt/Blister 32 befestigt werden. Es wird jedoch darauf hingewiesen, dass eine Ausführbarkeit des hier beschriebenen Verfahrens nicht auf einen bestimmten Sensorträgerfolientyp beschränkt ist.

In einem Verfahrensschritt S2, welcher vor oder nach dem Verfahrensschritt S1 ausgeführt wird, wird das Objekt/der Blister 32 in einer Atmosphärenvorrichtung, in welcher mindestens eine physikalische und/oder chemische Eigenschaft einer Innenatmosphäre variierbar ist, angeordnet. Unter der Atmosphärenvorrichtung kann beispielsweise ein Autoklav verstanden werden, in welchem eine Innentemperatur und/oder ein Innendruck variierbar sind. Weitere Beispiele für die Atmosphärenvorrichtung sind ein Sterilisator und/oder eine Druckkammer/Hochdruckkammer. Auch eine Vorrichtung, in deren Innenvolumen eine bestimmte chemische Innenatmosphäre einstellbar ist, kann unter der Atmosphärenvorrichtung verstanden werden. Es wird außerdem ausdrücklich darauf hingewiesen, dass die hier genannten Beispiele für die Atmosphärenvorrichtung nicht als limitierend zu interpretieren sind.

Während eines Betreibens der Atmosphärenvorrichtung wird die mindestens eine Information bezüglich der mindestens einen physikalischen Größe und/oder der mindestens einen chemischen Konzentration zumindest in der jeweiligen Teilumgebung der mindestens zwei folieneigenen und/oder externen Sensoren 16 und 26 der Sensorträgerfolie 10 von der mindestens einen Steuer- und/oder Auswerteeinrichtung festgelegt und ausgegeben. Beispielsweise wird eine Temperaturmessung an mehreren Messstellen des Objekts ausgeführt. Als Temperaturmessung ist (aufgrund der Ausbildbarkeit von vier Leiterbahnen 20 pro Sensor 16) auch eine Vierpunktmessung möglich. Als Alternative oder als Ergänzung zu der Temperaturmessung ist es auch möglich, eine Feuchtigkeit, einen Druck, eine mechanische Spannung und/oder eine mechanische Dehnung zu messen. Auch zur Leckagedetektion und/oder Fließfrontmessung kann die Sensorträgerfolie 10 eingesetzt werden. Beispielsweise kann während eines in dem Autoklaven ausgeführten Aushärteprozesses eine Ausdehnung und/oder eine Schrumpfung des Blisters 32 in Echtzeit gemessen werden. Dies kann zur Analyse des Aushärteprozesses, beispielsweise zur Verifizierung von Simulationen und/oder Annahmen, genutzt werden.

Außerdem weist das hier beschriebene Verfahren einen Verfahrensschritt S3 auf, in welchem die mindestens eine physikalische und/oder chemische Eigenschaft der Innenatmosphäre in der Atmosphärenvorrichtung unter Berücksichtigung der mindestens einen von der Sensorträgerfolie 10 ausgegebenen Information variiert wird. Beispielsweise werden die Innentemperatur und/oder der Innendruck in dem Autoklaven unter Berücksichtigung der mindestens einen von der Sensorträgerfolie 10 ausgegebenen Information variiert. Ein Temperaturverlauf und/oder Druckverlauf während des in dem Autoklaven ausgeführten Aushärteprozesses kann somit an die mittels der Sensorträgerfolie 10 gewonnene Information angepasst werden.

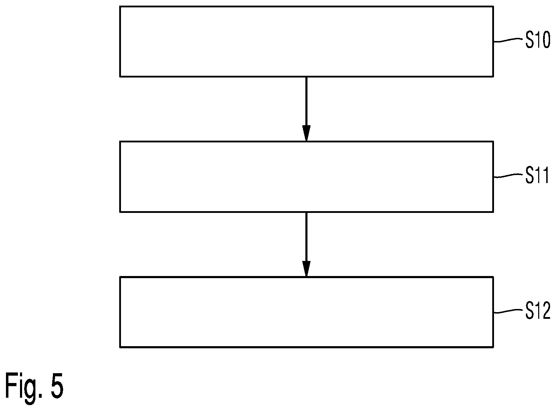

Fig. 5 zeigt ein Flussdiagramm zum Erläutern einer Ausführungsform des Herstellungsverfahrens zum Herstellen einer Sensorträgerfolie für ein Objekt.

In einem Verfahrensschritt S10 werden mindestens zwei folieneigene Sensoren 16 und/oder mindestens zwei Sensor-Anschlusskontakte 24, an welchen während einer Verwendung der Sensorträgerfolie 10 je ein externer Sensor 26 elektrische anbindbar ist, an einem Folienkörper 12 der späteren Sensorträgerfolie 10, welcher an dem Objekt befestigbar ist, befestigt. Vorzugsweise werden mindestens zwei jeweils auf mindestens einem hochtemperaturkompatiblen Halbleiterchip ausgebildete folieneigene Sensoren 16 an dem Folienkörper 12/der Sensorträgerfolie 10 befestigt. Eine derartige Sensorträgerfolie 10 kann auch in einem Autoklaven verwendet werden.

Die mindestens zwei folieneigenen Sensoren 16 können z.B. auf den Folienkörper 12 aufgedruckt, geklebt, festgesteckt und/oder aufgelötet werden. Beispielsweise können ein Siebdruck-Verfahren, ein Inkjet-Verfahren und/oder ein Aerosol-Jet-Verfahren zum Aufdrucken mindestens eines der Sensoren 16 auf den Folienkörper 12 ausgeführt werden. Auch mittels eines Flip-Chip-Verfahrens kann mindestens einer der Sensoren 16 auf und/oder in den Folienkörper 12 angeordnet werden. Des Weiteren können Bestückungsautomaten zum Anbringen mindestens eines der Sensoren 16 auf und/oder in dem Folienkörper 12 eingesetzt werden. Ebenso kann mindestens einer der folieneigenen Sensoren 16, beispielsweise monolithisch und/oder mittels einer Hybridintegration, in den Folienkörper 12 integriert werden.

Außerdem werden in einem Verfahrensschritt S11 mindestens eine folieneigene Steuer- und/oder Auswerteeinrichtung und/oder mindestens ein Einrichtung-Anschlusskontakt 18, an welchem während der Verwendung der Sensorträgerfolie 10 mindestens eine externe Steuer- und/oder Auswerteeinrichtung elektrisch anbindbar ist, an dem Folienkörper 12 befestigt.

In einem Verfahrensschritt S12 werden mindestens zwei Leiterbahnen 20 an und/oder in dem Folienkörper 12 derart ausgebildet, dass die mindestens eine folieneigene Steuer- und/oder Auswerteeinrichtung und/oder der mindestens eine Einrichtung-Anschlusskontakt 18 über die mindestens zwei Leiterbahnen 20 mit den mindestens zwei folieneigenen Sensoren 16 und/oder den mindestens zwei Sensor-Anschlusskontakten 24 verbunden wird. Die Verfahrensschritte S10 bis S12 können in beliebiger Reihenfolge ausgeführt werden. Außerdem können mindestens zwei der Verfahrensschritte S10 bis S12 gleichzeitig, bzw. zeitlich überlappend, ausgeführt werden.

Optionaler Weise kann vor den Verfahrensschritten S10 bis S12 der Folienkörper 12, beispielsweise durch ein Roll-to-Roll-Verfahren, hergestellt werden. Der Folienkörper 12 kann aus einer Vielzahl von Materialien, insbesondere aus einer Vielzahl von herkömmlicherweise zur Folienherstellung verwendeten Materialien, gebildet werden. Die Verfahrensschritte S10 bis S12 können jedoch auch unter Verwendung eines bereits fertig vorliegenden Folienkörpers 12 ausgeführt werden.

### Bezugszeichenliste

- 10: Sensorträgerfolie
- 12: Folienkörper
- 14: Objektkontaktfläche
- 16: folieneigenen Sensoren
- 18: Einrichtung-Anschlusskontakt
- 20: Leiterbahnen
- 22: Leiterbahnen
- 24: Sensor-Anschlusskontakte
- 26: externer Sensor
- 28: Steckverbindungsteil
- 30: Kabelbaum
- 32: Blister
- S1 bis S3: Verfahrensschritte
- S10 bis S12: Verfahrensschritte

## Patentansprüche

1. Sensorträgerfolie (10) für ein Objekt (32) mit:
einem Folienkörper (12), welcher an dem Objekt (32) befestigbar ist;
wobei der Folienkörper (12) ausgebildet ist mit:
- mindestens zwei an und/oder in dem Folienkörper (12) angeordneten folieneigenen Sensoren (16) und/oder mindestens zwei an und/oder in dem Folienkörper (12) ausgebildeten Sensor-Anschlusskontakten (24), an welchen je ein externer Sensor (26) elektrischen anbindbar ist;
- mindestens einer an und/oder in dem Folienkörper (12) angeordneten folieneigenen Steuer- und/oder Auswerteeinrichtung und/oder mindestens einem an und/oder in dem Folienkörper (12) ausgebildeten Einrichtung-Anschlusskontakt (18), an welchem mindestens eine externe Steuer- und/oder Auswerteeinrichtung elektrisch anbindbar ist; und
- mindestens zwei an und/oder in dem Folienkörper (12) ausgebildeten Leiterbahnen (20), über welche die mindestens eine folieneigene Steuer- und/oder Auswerteeinrichtung und/oder der mindestens eine Einrichtung-Anschlusskontakt (18) mit den mindestens zwei folieneigenen Sensoren (16) und/oder den mindestens zwei Sensor-Anschlusskontakten (24) verbunden sind.

2. Sensorträgerfolie (10) nach Anspruch 1, wobei mindestens ein Temperatursensor, mindestens ein Drucksensor, mindestens ein kapazitiver Sensor, mindestens ein Ultraschallsensor, mindestens ein Leckagedetektionssensor, mindestens ein Dehnungsmesssensor, mindestens ein Fließgeschwindigkeitssensor, mindestens ein Fließdrucksensor, mindestens ein Härtemesssensor, mindestens ein chemischer Nachweissensor, mindestens ein chemischer Stoffkonzentrationsmesssensor, mindestens ein Feuchtigkeitssensor und/oder mindestens ein Gassensor als die mindestens zwei folieneigenen Sensoren (16) an und/oder in dem Folienkörper (12) angeordnet und/oder als die mindestens zwei externen Sensoren (26) an den mindestens zwei Sensor-Anschlusskontakten (24) elektrisch anbindbar sind.

3. Sensorträgerfolie (10) nach Anspruch 1 oder 2, wobei Sensorsignale von den mindestens zwei folieneigenen und/oder an den mindestens zwei Sensor-Anschlusskontakten (24) elektrisch angebundenen externen Sensoren (16, 26) über die mindestens zwei Leiterbahnen (20) zu der mindestens einen folieneigenen und/oder an dem mindestens einen Einrichtung-Anschlusskontakt (18) elektrisch angebundenen externen Steuer- und/oder Auswerteeinrichtung transferierbar sind.

4. Sensorträgerfolie (10) nach einem der vorhergehenden Ansprüche, wobei Steuersignale von der mindestens einen folieneigenen und/oder an dem mindestens einen Einrichtung-Anschlusskontakt (18) elektrisch angebundenen externen Steuer- und/oder Auswerteeinrichtung über die mindestens zwei Leiterbahnen (20) zu den mindestens zwei folieneigenen und/oder an den mindestens zwei Sensor-Anschlusskontakten (24) elektrisch angebundenen externen Sensoren (16, 26) transferierbar sind.

5. Sensorträgerfolie (10) nach einem der vorhergehenden Ansprüche, wobei eine Objektkontaktfläche (14) des Folienkörpers (12) zumindest teilflächig mit mindestens einem Klebstoff beschichtet ist.

6. Sensorträgerfolie (10) nach einem der vorhergehenden Ansprüche, wobei der Folienkörper (12) mindestens eine elektrisch-isolierende Folienschicht, mindestens eine thermisch-isolierende Folienschicht und/oder mindestens eine flexible Folienschicht umfasst.

7. Sensorträgerfolie (10) nach einem der vorhergehenden Ansprüche, wobei die mindestens zwei folieneigenen Sensoren (16) je auf mindestens einem hochtemperaturkompatiblen Halbleiterchip ausgebildet sind.

8. Blister (32) mit einer daran befestigten Sensorträgerfolie (10) nach einem der vorhergehenden Ansprüche.

9. Blister (32) nach Anspruch 8, wobei der Folienkörper (12) der Sensorträgerfolie (10) aus mindestens einem Material des Blisters (32) gebildet ist.

10. Verfahren zum Bestücken eines Objekts (32) mit einer Sensorik zum Ermitteln mindestens einer physikalischen Größe und/oder mindestens einer chemischen Konzentration mit dem Schritt:
Befestigen einer Sensorträgerfolie (10) nach einem der Ansprüche 1 bis 7,
- deren mindestens zwei folieneigene Sensoren (16) dazu ausgelegt sind, Sensorsignale bezüglich der mindestens einen physikalischen Größe und/oder der mindestens einen chemischen Konzentration auszugeben, und/oder an deren mindestens zwei Sensor-Anschlusskontakten (24) mindestens zwei zum Bereitstellen von Sensorsignalen bezüglich der mindestens einen physikalischen Größe und/oder der mindestens einen chemischen Konzentration ausgelegte externe Sensoren (26) elektrisch angebunden werden, und
- deren mindestens eine folieneigene Steuer- und/oder Auswerteeinrichtung dazu ausgelegt ist, unter Berücksichtigung der Sensorsignale mindestens eine Information bezüglich der mindestens einen physikalischen Größe und/oder der mindestens einen chemischen Konzentration festzulegen und auszugeben, und/oder an deren mindestens einem Einrichtung-Anschlusskontakt (18) mindestens eine zum Festlegen und Ausgeben der mindestens einen Information bezüglich der mindestens einen physikalischen Größe und/oder der mindestens einen chemischen Konzentration ausgelegte externe Steuer- und/oder Auswerteeinrichtung elektrisch angebunden wird,
an dem Objekt (32).

11. Messverfahren mit den Schritten:
Bestücken eines Objekts (32) mit einer Sensorik zum Ermitteln mindestens einer physikalischen Größe und/oder mindestens einer chemischen Konzentration gemäß dem Verfahren nach Anspruch 10; und
Festlegen und Ausgeben der mindestens einen Information bezüglich der mindestens einen physikalischen Größe und/oder der mindestens einen chemischen Konzentration.

12. Verfahren zum Einstellen einer Atmosphäre für ein Objekt (32) mit den Schritten:
Bestücken des Objekts (32) mit einer Sensorik zum Ermitteln mindestens einer physikalischen Größe und/oder mindestens einer chemischen Konzentration gemäß dem Verfahren nach Anspruch 10 (S1);
Anordnen des Objekts (32) in einer Atmosphärenvorrichtung, in welcher mindestens eine physikalische und/oder chemische Eigenschaft einer Innenatmosphäre variierbar ist (S2); und
Variieren der mindestens einen physikalischen und/oder chemischen Eigenschaft der Innenatmosphäre in der Atmosphärenvorrichtung unter Berücksichtigung der mindesten einen von der Sensorträgerfolie (10) ausgegebenen Information (S3).

13. Verfahren zum Autoklavieren eines Objekts (32) mit den Schritten:
Bestücken des Objekts (32) mit einer Sensorik zum Ermitteln mindestens einer physikalischen Größe und/oder mindestens einer chemischen Konzentration gemäß dem Verfahren nach Anspruch 10 (S1);
Anordnen des Objekts (32) in einem Autoklaven, in welchem eine Innentemperatur und/oder ein Innendruck variierbar sind (S2); und
Variieren der Innentemperatur und/oder des Innendrucks in dem Autoklaven unter Berücksichtigung der mindesten einen von der Sensorträgerfolie (10) ausgegebenen Information (S3).

14. Herstellungsverfahren zum Herstellen einer Sensorträgerfolie (10) für ein Objekt (32) mit den Schritten:
Befestigen von mindestens zwei folieneigenen Sensoren (16) und/oder von mindestens zwei Sensor-Anschlusskontakten (24), an welchen während einer Verwendung der Sensorträgerfolie (10) je ein externer Sensor (26) elektrischen anbindbar ist, an einem Folienkörper (12) der späteren Sensorträgerfolie (10), welcher an dem Objekt (32) befestigbar ist (S10);
Befestigen von mindestens einer folieneigenen Steuer- und/oder Auswerteeinrichtung und/oder von mindestens einem Einrichtung-Anschlusskontakt (18), an welchem während der Verwendung der Sensorträgerfolie (10) mindestens eine externe Steuer- und/oder Auswerteeinrichtung elektrisch anbindbar ist, an dem Folienkörper (12) (S11); und
Ausbilden von mindestens zwei Leiterbahnen (20) an und/oder in dem Folienkörper (12) derart, dass die mindestens eine folieneigene Steuer- und/oder Auswerteeinrichtung und/oder der mindestens eine Einrichtung-Anschlusskontakt (24) über die mindestens zwei Leiterbahnen (20) mit den mindestens zwei folieneigenen Sensoren (16) und/oder den mindestens zwei Sensor-Anschlusskontakten (24) verbunden wird (S12).

15. Herstellungsverfahren nach Anspruch 14, wobei mindestens zwei jeweils auf mindestens einem hochtemperaturkompatiblen Halbleiterchip ausgebildete folieneigene Sensoren (16) an dem Folienkörper (12) befestigt werden.
